# EUROPEAN PATENT SPECIFICATION

(11) **EP 3 745 359 B1**
(45) Date of publication and mention of the grant of the patent: **01.10.2025**
(21) Application number: 20757506.9
(22) Date of filing: 19.01.2020
(51) Int. Cl.: G06T 19/00, G06V 20/52

(54) **IMAGE RECOGNITION SYSTEM AND METHOD**
BILDERKENNUNGSSYSTEM UND -VERFAHREN
SYSTÈME ET PROCÉDÉ DE RECONNAISSANCE D'IMAGE

(30) Priority: 28.02.2019 CN 201910154670
(43) Date of publication of application: 02.12.2020
(73) Proprietor: Tsinghua University, Beijing 100084 (CN); Nuctech Company Limited, TongFang Building Shuangqinglu Haidian District Beijing 100084 (CN)
(72) Inventor: ZHAO, Ziran, Beijing 100084 (CN); CHEN, Zhiqiang, Beijing 100084 (CN); ZHANG, Li, Beijing 100084 (CN); GU, Jianping, Beijing 100084 (CN); YUAN, Shaoming, Beijing 100084 (CN); LIU, Peng, Beijing 100084 (CN); LIU, Kuo, Beijing 100084 (CN); GENG, Xingjie, Beijing 100084 (CN); ZHOU, Zhiqiang, Beijing 100084 (CN)
(74) Representative: Gunzelmann, Rainer
(86) International application number: PCT/CN2020/072957
(87) International publication number: WO 2020/173258

(56) References cited:
- CN-A- 102 542 601
- CN-A- 106 198 580
- CN-A- 106 548 263
- CN-A- 108 268 120
- CN-A- 108 519 625
- CN-A- 109 785 446
- CN-U- 209 895 386
- US-A1- 2008 240 578
- US-A1- 2018 189 945
- WANG YEN-HAN ET AL: "Dynamic human object recognition by combining color and depth information with a clothing image histogram", vol. 16, no. 1, 1 January 2019 (2019-01-01), CR, XP055842536, ISSN: 1729-8814, Retrieved from the Internet <URL:https://journals.sagepub.com/doi/pdf/10.1177/1729881419828105> [retrieved on 20210920], DOI: 10.1177/1729881419828105
- ZHOU KAIYANG ET AL: "Detecting humans in RGB-D data with CNNs", 2017 FIFTEENTH IAPR INTERNATIONAL CONFERENCE ON MACHINE VISION APPLICATIONS (MVA), MVA ORGANIZATION, 8 May 2017 (2017-05-08), pages 306 - 309, XP033126588, DOI: 10.23919/MVA.2017.7986862

## Description

### TECHNICAL FIELD

The present invention relates to the field of security inspection, and more particularly, to an image recognition system, an image recognition method, an electronic device and a non-transitory computer-readable medium.

### BACKGROUND

Terahertz technology may perform long-range dynamic real-time imaging of passengers to achieve non-intervention and non-cooperative security inspections. Millimeter wave technology may perform clear and high-resolution imaging of human body to achieve fine security inspection of human body. Based on these advantages, terahertz/millimeter wave technology is widely used in the field of security inspection. However, in the existing security inspection systems, security inspection results are displayed on a display, and a security staff is required to view in real time various kinds of security inspection information displayed on the display. Even if an inspected object does not carry dangerous goods, security inspection information on the inspected object needs to be viewed in real time. As a result, a large working intensity is applied on the security staff, so he/she is prone to fatigue, which may easily lead to security leaks.

When the security staff finds that the inspected object carries any contraband on the basis of the information displayed on the display, the security staff needs to rush from the display to the scene for processing, which would result in low work efficiency and even cause the suspect to escape due to improper processing.

US 2018/189945 A1 concerns a method, a device and a security system for image data processing based on VR or AR.

US 2008/240578 A1 concerns an apparatus, a method and a system for facilitating visual identification of a prohibited object in an image during security screening.

WANG YEN-HAN ET AL, "Dynamic human object recognition by combining color and depth information with a clothing image histogram", INTERNATIONAL JOURNAL OF ADVANCED ROBOTIC SYSTEMS, CR, vol. 16, no. 1, doi:10.1177/1729881419828105, ISSN 1729-8814, (20190101), concerns a technique for human object detection, tracking and recognition.

ZHOU KAIYANG ET AL, "Detecting humans in RGB-D data with CNNs", 2017 FIFTEENTH IAPR INTERNATIONAL CONFERENCE ON MACHINE VISION APPLICATIONS (MVA), MVA ORGANIZATION, (20170508), doi:10.23919/MVA.2017.7986862, pages 306 - 309, XP033126588, concerns a technique for detecting humans in RGB-D data.

### SUMMARY

The present invention is defined by the independent claims. Further aspects of the present invention are defined by the dependent claims.

Based on various aspects provided by the present application, security staff can observe in real time, through the AR device, indication about whether or not each passenger carries contraband or other detection information. Therefore, security staff do not need to stay fixed in front of the display screen to view the detection information. It is possible to obtain the detection information of each passenger through the AR device in the process of flexible movement, and when an emergency situation occurs, the emergency situation can be handled quickly and rapidly to improve the efficiency of security inspection.

### BRIEF DESCRIPTION OF THE DRAWINGS

FIG. 1 illustrates a schematic block diagram of an image recognition system according to an embodiment of the present invention.
FIG. 2 illustrates a schematic block diagram of a detection module in the image recognition system according to an embodiment of the present invention.
FIG. 3 illustrates a transformation of the shape of contraband in different perspectives according to an embodiment of the present invention.
FIG. 4 illustrates a flowchart of an image recognition method according to an embodiment of the present invention.
FIG. 5 illustrates an exemplary detailed flowchart of an operation for detecting whether or not the inspected object carries contraband.
FIG. 6 illustrates an exemplary flowchart of an operation for visually marking the inspected object on an AR module according to an embodiment of the present invention.

### DETAILED DESCRIPTION

Specific embodiments of the present invention will be described in detail below. It should be noted that the embodiments described herein are only for illustration and are not intended to limit the present invention. In the following description, numerous specific details are set forth in order to provide a thorough understanding of the present invention. However, it will be apparent to those skilled in the art that these specific details need not be employed to practice the present invention. In other examples, to avoid obscuring the present invention, well-known circuits, materials, or methods are not specifically described.

Throughout the specification, reference to "one embodiment", "an embodiment", "one example", or "an example" means that particular features, structures, or characteristics described in connection with the embodiment or example are included in at least one embodiment of the present invention. Thus, the appearances of the phrases "in one embodiment", "in an embodiment", "one example", or "an example" in various places throughout the specification are not necessarily all referring to the same embodiment or example. Furthermore, the particular features, structures, or characteristics may be combined in any suitable combination and/or sub-combination in one or more embodiments or examples.

It will be understood that when an element is referred to as being "coupled" or "connected" to another element, the element may be directly coupled or connected to the another element or intervening elements may be present. In contrast, when an element is referred to as being "directly coupled" or "directly connected" to another element, there are no intervening elements present.

Furthermore, term "and/or" as used herein includes any and all combinations of one or more of the associated listed items.

It will be understood that a singular noun corresponding to a term may include one or more things unless the context clearly indicates otherwise. As used herein, each of phrases such as "A or B", "at least one of A and B", "at least one of A or B", "A, B or C", "at least one of A, B and C" and "at least one of A, B, or C" may include all possible combinations of items enumerated within a corresponding one of the plurality of phrases. As used herein, terms such as "first" and "second" or "1st" and "2nd" may be used to simply distinguish a corresponding component from another component and not to limit the components in other respects (for example, importance or order).

As used herein, term "module" may include a unit implemented in hardware, software, or firmware, and is interchangeable with other terms (for example, "logic", "logic block", "section", or "circuitry"). A module may be a single integrated component that is adapted to perform one or more functions or be the smallest unit or part of the single integrated component. For example, according to an embodiment, the module may be implemented in the form of an application specific integrated circuit (ASIC).

It should be understood that the various embodiments of the present invention and the terms used therein are not intended to limit technical features set forth herein to specific embodiments, but include various changes, equivalents, or alternative forms of corresponding embodiments. Unless otherwise explicitly defined herein, all terms will give their broadest possible interpretation, including the meaning implied in the description and the meaning understood by those skilled in the art and/or defined in dictionaries, papers, and the like.

In addition, those skilled in the art should understand that the drawings provided herein are for the purpose of illustration, and the drawings are not necessarily drawn to scale. For descriptions of the drawings, similar reference numbers may be used to refer to similar or related elements. The present invention will be described exemplarily below with reference to the accompanying drawings.

In order to solve the problem that security staff must be fixed at a certain position to view security inspection information, the present invention applies augmented reality (AR) technology in the field of security inspection so that security inspection information can be present in real time through AR devices. For the convenience of explanation and description, AR glasses are taken as an example for description below.

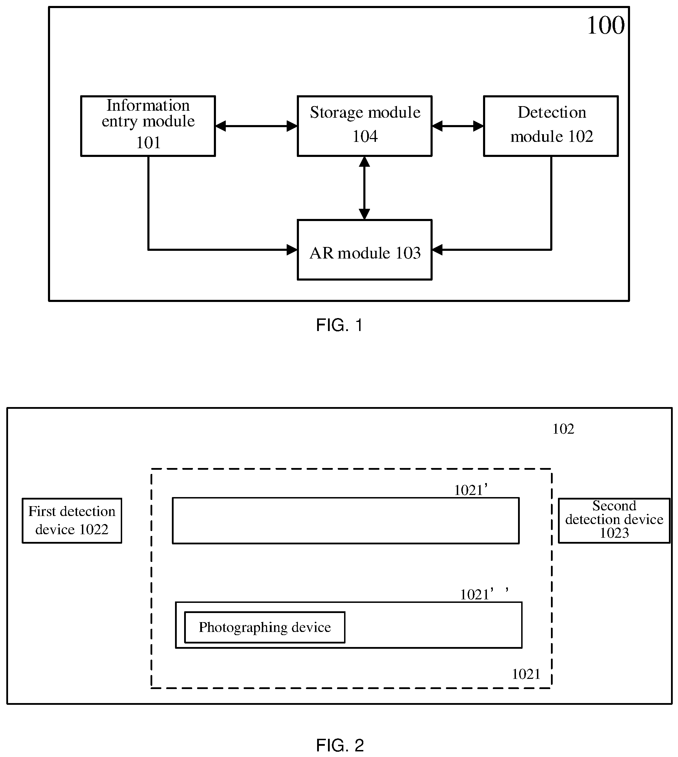

FIG. 1 illustrates a schematic block diagram of an image recognition system 100 according to an embodiment of the present invention. As shown in FIG. 1, the image recognition system 100 include an information entry module 101, a detection module 102, an AR module 103, and a storage module 104.

The information entry module 101 is connected to the detection module 102, the AR module 103, and the storage module 104, respectively. The connection may be a wired connection or a wireless connection.

The information entry module 101 is configured to collect information of the inspected object. The information of the inspected object may be various kinds of information about the inspected object, for example, an image of the inspected person, name, age, gender, ID number, height, home address, work unit, education background of the inspected person, ticket information, the destination of a ride of the inspected person, and the like.

The information entry module 101 is applied to a face recognition gate in the security inspection system to register information of the inspected object at the place where the inspected object undergoes security inspection.

The information entry module 101 may also be configured to register basic information of the inspected object, and compare the registered basic information with the identity information of criminal suspects in a public security system to identify whether the inspected object is a criminal suspect.

The information entry module 101 may be further configured to send the registered basic information of the inspected object to the detection module 102, the AR module 103, and the storage module 104, and store the basic information in the storage module 104.

The detection module 102 is configured to detect the inspected object and a luggage carried by the inspected object, and to send a detection result to the AR module 103 and the storage module 104.

Specifically, the detection module 102 is described with reference to FIG. 2. FIG. 2 illustrates a schematic block diagram of the detection module 102 according to an embodiment of the present invention.

The detection module 102 includes a detection lane 1021, a first detection device 1022, and a second detection device 1023.

According to an embodiment, the detection lane 1021 may include a first detection lane 1021' suitable for detecting an inspected object such as a person, an animal, and the like, and a second detection lane 1021" suitable for performing security inspection on luggage belonging to the inspected object.

According to an embodiment, the second detection lane 1021" includes a photographing device. The photographing device may be provided at the front end of the second detection lane 1021" (that is, the end where the luggage enters the second detection lane 1021"), photograph the inspected object and one or more luggages belonging to the inspected object, and store the image of the inspected object in the storage module 104 in association with the image of luggage of the inspected object.

According to an embodiment, the first detection device 1022 and the second detection device 1023 are provided at a front portion (that is, an end where the inspected object enters the first detection lane) and a rear portion (that is, an end where the inspected object leaves the first detection lane) of the first detection lane 1021', respectively.

According to an embodiment, the first detection device 1022 and the second detection device 1023 are configured to detect the inspected object entering the first detection lane 1021', respectively, to detect whether the inspected object carries a suspectable thing.

According to an embodiment, the first detection device 1022 and the second detection device 1023 may be the same type or different types.

According to an embodiment, the first detection device 1022 includes a first image acquisition device and a second image acquisition device. The second detection device 1023 includes a third image acquisition device and a fourth image acquisition device.

According to an embodiment, one image acquisition device of the first image acquisition device and the second image acquisition device may be the same as one image acquisition device of the third image acquisition device and the fourth image acquisition device, and the other image acquisition device of the first image acquisition device and the second image acquisition device may be the same as the other image acquisition device of the third image acquisition device and the fourth image acquisition device.

According to an embodiment, the first image acquisition device is configured to obtain a perspective image of the inspected object, and the second image acquisition device is configured to obtain a color image of the inspected object having depth information.

Alternatively, the second image acquisition device may be configured to obtain the perspective image of the inspected object, and the first image acquisition device may be configured to obtain the color image of the inspected object having depth information.

According to an embodiment, the third image acquisition device may be configured to obtain the perspective image of the inspected object, and the fourth image acquisition device may be configured to obtain the color image of the inspected object having depth information.

Alternatively, the fourth image acquisition device may be configured to obtain the perspective image of the inspected object, and the third image acquisition device may be configured to obtain the color image of the inspected object having depth information.

The first image acquisition device and the third image acquisition device are terahertz cameras. The second image acquisition device and the fourth image acquisition device may be depth cameras. The terahertz cameras are used to obtain a front perspective image and a back perspective image of the inspected object. The depth cameras are used to obtain a color image of a detection scene and the inspected object and a spatial distance of the inspected object away from the depth camera.

For the first detection device 1022 to detect whether the inspected object carries the suspectable thing, the first detection device 1022 may be configured to: obtain a human mask of the inspected object in the perspective image based on the image of the inspected object in the color image; when it is detected that contraband is displayed on the human mask of the inspected object in the perspective image, correspondingly mark the image of the contraband on the inspected object in the color image.

According to an embodiment, obtaining the human mask of the inspected object in the perspective image may be achieved by: aligning pixels in the perspective image with pixels in the color image to obtain transformation parameters between the terahertz camera and the depth camera; extracting a human mask in the color image using the depth information (for example, human skeleton) in the color image and a target segmentation detection framework (for example, mask RCNN); and extracting the human mask in the perspective image obtained by the terahertz camera based on the transformation parameters and the extracted human mask in the color image.

In one example, the perspective image and the color image may be aligned using rotation, translation, and scaling, for example, according to an affine transformation model.

For the contraband carried by the inspected object, in one example, in the perspective image obtained by the terahertz camera, the contraband appears darker in color than colors in other areas.

For the contraband carried by the inspected object, in one example, whether or not a dark-colored area in the perspective image is contraband may be roughly inferred, for example, by comparing a pre-trained model (for example, a target detection framework) with the shape of the darker-colored area.

For the contraband carried by the inspected object, in one example, a type of the contraband (for example, a cutter, a gun, and the like) may be roughly inferred, for example, through a pre-trained model.

According to an embodiment, the operation of correspondingly marking the image of the contraband on the inspected object in the color image may be achieved by: mapping a location of the contraband in the human mask in the perspective image obtained by the terahertz camera to a corresponding area of the human mask in the color image through the transformation parameters between the terahertz camera and the depth camera.

In one example, information such as the type of contraband may also be displayed on the human mask in the perspective image.

Since the first detection device 1022 and the second detection device 1023 are located at the front and rear ends of the first detection lane 1021', respectively, the rear perspective image of the inspected object obtained by the first detection device 1022 and the front perspective image obtained by the second detection device 1023 may not match exactly due to different perspectives, parameters, and the like. Therefore, it is necessary to obtain a spatial position relationship for each inspected object through the depth cameras in the first detection device 1022 and the second detection device 1023.

Specifically, for example, the depth camera in the first detection device 1022 may be used as a reference camera, and the depth camera in the second detection device 1023 may be calibrated in external parameters by using multi-mode fusion technology, thereby establishing a global coordinate system, and then the images obtained by the depth cameras are subjected to information fusion, so as to obtain the spatial position relationship for each inspected object.

Further, when the spatial position relationship for the inspected object is known, the transformation parameters between the terahertz camera and the depth camera may be used to obtain a position, in the global coordinate system, of each pixel in the human mask in the perspective image obtained by the terahertz camera. Thus, the front perspective image and the rear perspective image of each passenger are matched to determine whether the image of the contraband in the front perspective image and the image of the contraband in the rear perspective image are the same image or different images.

Further, in a case where contraband is presented in the perspective image obtained through the terahertz camera, the information of the position of the contraband in the global coordinate system may be obtained based on the positions of the pixels of the contraband in the global coordinate system.

In one example, when there are multiple inspected objects in the first detection lane 1021' at the same time, the first detection device 1022 may fail to obtain the rear perspective image of the inspected object, or the second detection device 1023 may fail to obtain the front perspective image of the inspected object. When there are other inspected objects before and after the inspected object, the first detection device 1022 cannot obtain the rear perspective image of the inspected object and the second detection device 1023 cannot obtain the front perspective image of the inspected object. Therefore, in order to solve the problem, the detection module 102 may include an auxiliary detection device.

The auxiliary detection device may include a terahertz camera and a depth camera.

According to an embodiment, the auxiliary detection device may be located at a middle portion of the first detection lane 1021'.

According to an embodiment, the number of the auxiliary detection devices may be one or more.

In one example, in order to obtain the spatial position relationship for each inspected object, for example, the depth camera in the first detection device 1022 may be used as the reference camera, and the depth camera in the second detection device 1023 and the depth camera in the auxiliary detection device may be calibrated in external parameters by using multi-mode fusion technology, thereby establishing the global coordinate system, and then the images obtained by the respective depth cameras are subjected to information fusion, so as to obtain the spatial position relationship for each inspected object.

Alternatively, in order to obtain the spatial position relationship for each inspected object, for example, the depth camera in the second detection device 1023 may be used as the reference camera, and the depth camera in the first detection device 1022 and the depth camera in the auxiliary detection device may be calibrated in external parameters by using multi-mode fusion technology, thereby establishing the global coordinate system, and then the images obtained by the respective depth cameras are subjected to information fusion, so as to obtain the spatial position relationship for each inspected object.

Alternatively, in order to obtain the spatial position relationship for each inspected object, for example, the depth camera in an auxiliary detection device may be used as the reference camera, and the depth camera in the first detection device 1022, the depth camera in the second detection device 1023 and the depth cameras in other auxiliary detection devices may be calibrated in external parameters by using multi-mode fusion technology, thereby establishing the global coordinate system, and then the images obtained by the respective depth cameras are subjected to information fusion, so as to obtain the spatial position relationship for each inspected object.

Returning again to FIG. 1, the AR module 103 may include a display device. In one example, in a case where the AR module 103 is AR glasses, the display device may be the lens on the AR glasses.

The AR module 103 may be configured to receive an abnormality detection result from the information entry module 101 and the detection module 102 and present the abnormality detection result to the security staff.

According to an embodiment, the abnormality detection result may be information indicating that a criminal suspect matching with identity information of one criminal suspect in the public security system is detected in the information entry module 101.

According to an embodiment, the abnormality detection result may be information indicating that it is detected in the detection module 102 that contraband is carried on the inspected object or that the contraband is carried in the luggage belonging to the inspected object.

When there is no abnormality in the detection result, the AR module presents the same scene as the real world.

In one example, when the inspected object carries contraband, the AR module 103 may receive information of the inspected object (for example, image, name, height, and the like), the spatial position information of the inspected object in the global coordinate system, the spatial position information of the contraband carried by the inspected object (for example, where the contraband is located on the inspected object), information of the contraband, and the like, from the detection module 102, and present the received information to the security staff so that the security staff can accurately find the inspected object who carries the contraband.

In one example, when contraband is hidden in the luggage carried by the inspected object, the AR module 103 may receive information of the luggage (for example, an image of the luggage, and the like), information of the position of the contraband in the luggage, and the like, from the detection module 102, find out the inspected object that matches the luggage in which the contraband is hidden from the storage module 104, and then accurately indicate the inspected object to the security staff.

For the same contraband, since the perspectives of the first detection device and the second detection device in the detection module 102 may be different from that of the AR module 103, the AR module 103 may be configured to convert the shape of the contraband based on the information of the contraband (for example, the spatial position of the contraband in the global coordinate system) received from the detection module 102 and a dynamic real-time conversion relationship between the AR module and the global coordinate system. For example, software or hardware (for example, a visual odometer or gyroscope) or the like included in the AR module may be used to record the real-time position of the AR glasses in real time, and then a rigid body conversion relationship between the AR module and the global coordinate system may be established based on the real-time position.

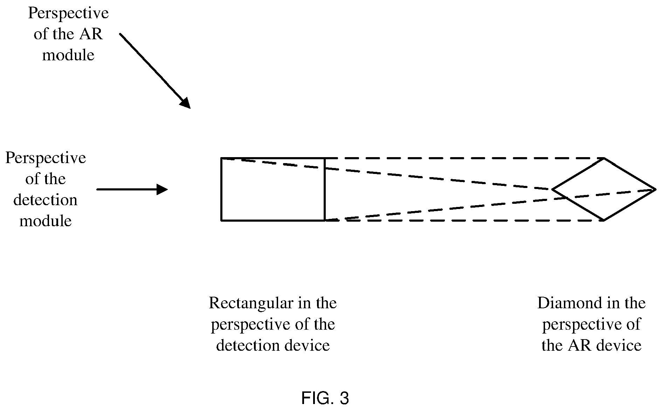

FIG. 3 illustrates the transformation of the shape of contraband in different perspectives according to an embodiment of the present invention. As shown, in the perspectives of the first detection device and the second detection device, the shape of the contraband is rectangular, but in the perspective of the AR module, the shape of the contraband is diamond.

In one example, the image recognition system 100 may further include a millimeter wave detection device to perform fine detection on the inspected object, so as to accurately identify what the contraband carried by the inspected object is.

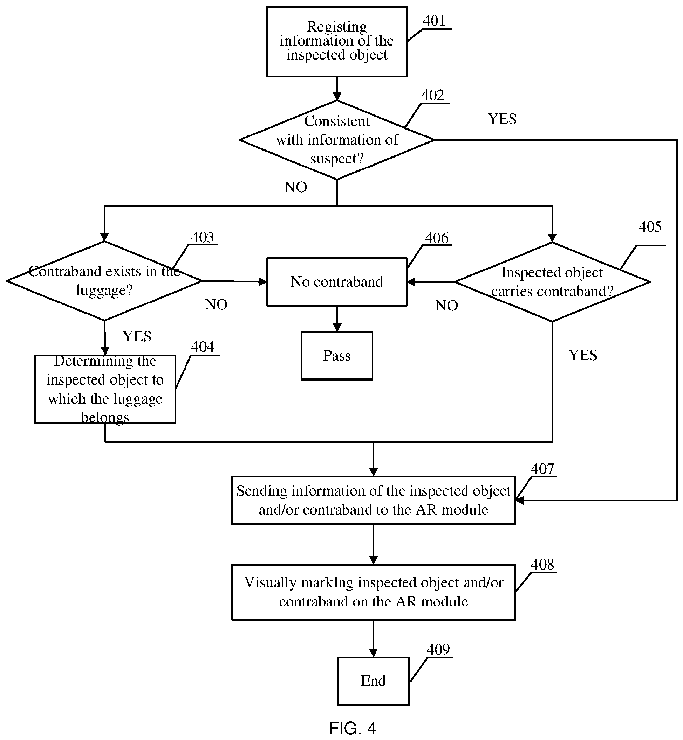

FIG. 4 illustrates a flowchart of an image recognition method 40 according to an embodiment of the present invention.

At step 401, the information of the inspected object is registered. The information of the inspected object may be, for example, the name, gender, height, and the like, of the inspected object.

At step 402, it is determined whether or not the inspected object is a suspect based on the registered information of the inspected object. For example, it is possible to determine whether or not the inspected object is a suspect by comparing the registered information of the inspected object with the information of the suspects in the public security system.

In the case where the inspected object is a suspect (YES at step 402), the process proceeds to step 407 in where the information of the inspected object is sent to the AR module, and then at step 408, the AR module visually marks the inspected object based on the received information of the inspected object.

In the case where the inspected object is not a suspect (NO at step 402), the process proceeds to step 403 and step 405. At step 403, it is detected whether or not there is contraband in the luggage. In the case where contraband exists in the luggage (YES at step 403), the process proceeds to step 404. At step 404, based on the relationship between the luggage and the inspected object to which the luggage belongs, the inspected object to which the luggage belongs is matched. Then, at step 407, the information of the matched inspected object (for example, the spatial position of the inspected object, and the like) and/or the information of the contraband are sent to the AR module. Then, at step 408, the AR module visually marks the inspected object and/or contraband based on the received information of the inspected object and/or the received information of the contraband. So far, the process ends.

When the inspected object is marked at step 408, information of the inspected object may be presented at the same time.

At step 405, it is detected whether or not contraband is carried on the inspected object. In the case where the inspected object carries contraband (Yes at step 405), the process sequentially performs the operations at steps 407 and 408. The information of the inspected object (for example, the position information of the inspected object, the basic information of the inspection object (for example, image, name, and the like)) and the information of the contraband carried (for example, the position information of the contraband, the shape and type of the contraband, and the like) are sent to the AR, and then the inspected object and the contraband is visually marked.

In the case where the inspected object does not carry the contraband (that is, NO at step 405) and there is no contraband in the luggage of the inspected object (that, NO at step 403), the process proceeds to step 406 in where the inspected object is allowed to pass through with his/her luggage.

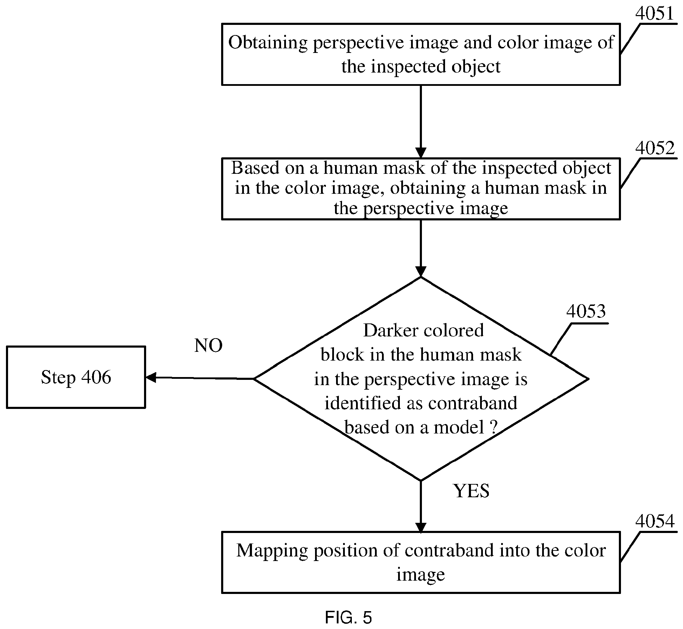

FIG. 5 illustrates an exemplary detailed flowchart of the operation 405 of detecting whether or not contraband is carried on the inspected object.

At step 4051, the perspective image and the color image with depth information of the inspected object are obtained, for example, by the terahertz camera and the depth camera.

At step 4052, the human mask of the inspected object is extracted from the color image, and then based on the human mask of the color image, the human mask of the perspective image is extracted from the perspective image. For example, the perspective image and the color image are aligned using rotation, translation, and scaling according to the affine transformation model, to obtain the transformation parameters between the terahertz camera and the depth camera. Then, the depth information in the color image (for example, the human skeleton) and the target segmentation detection framework (for example, the mask RCNN) are used to extract the human mask of the color image. Then, according to the transformation parameters between the terahertz camera and the depth camera, based on contour information of the human mask in the color image, the human mask in the perspective image is extracted.

At step 4053, based on the pre-trained model, it is identified whether or not a darker colored block existing in the human mask in the perspective image is contraband. For example, the target detection framework (such as YOLOv3) is used to detect whether or not the darker colored block is contraband.

In the case where the darker colored block is contraband, at step 4054, the position of the contraband in the perspective image is correspondingly mapped into the color image.

In the case where the darker colored block is not contraband, the process proceeds to step 406 as described above.

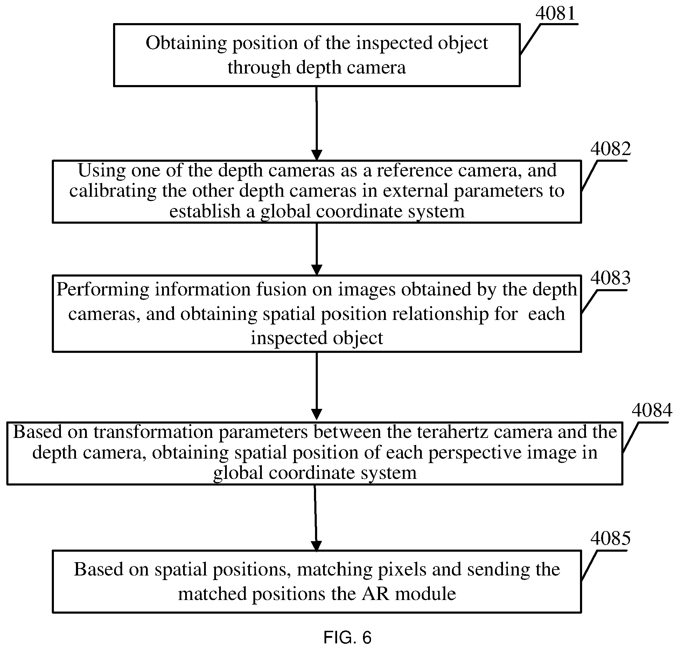

FIG. 6 illustrates an exemplary flowchart of the operation 408 of visually marking the inspected object on the AR module according to an embodiment of the present invention.

At step 4081, the spatial position of the inspected object relative to each depth camera is obtained through the corresponding each depth camera.

At step 4082, one of the depth cameras is used as the reference camera, and the other depth cameras are calibrated in external parameters to establish a global coordinate system.

At step 4083, the image information obtained by the respective depth cameras is subjected to information fusion, thereby obtaining the spatial position relationship for each inspected object.

At step 4084, based on the transformation parameters between the terahertz camera and the depth camera, the spatial position of each pixel in the perspective image in the global coordinate system is obtained.

At step 4085, based on the spatial position of each pixel, the front perspective image and the rear perspective image of the inspected object are matched to determine whether or not the image of the contraband in the front perspective image and the image of the contraband in the rear perspective image are the same image or different images.

At step 4086, the position of the inspected object and the position of the contraband are sent to the AR module to mark the inspected object and where the contraband is on the inspected object in the global coordinate system.

Since the security staff wears/carries/bears the AR modules and moves around, for the same contraband, the shape of the contraband may be changed depending on the perspectives of the AR modules. Therefore, optionally, at step 4087, the AR module may change the shape of the contraband in the perspective image according to a transformation relationship between the AR module and the global coordinate system to form a graphic shape in the perspective of the AR module.

Although a plurality of components are shown in the above various block diagrams, those skilled in the art should understand that embodiments of the present invention may be implemented in the absence of one or more components or in combination with certain components.

Although the steps have been described above according to the order shown in the drawings, those skilled in the art should understand that the steps may be performed in a different order, or embodiments of the present invention may be implemented without one or more of the above steps.

It may be understood from the foregoing that the electronic components of one or more systems or devices may include, but are not limited to, at least one processing unit, a memory, and a communication bus or communication device that couples various components including the memory to the processing unit. The system or device may include or access to a variety of device-readable media. System memory may include device-readable storage media in the form of volatile and/or non-volatile memory (for example, read-only memory (ROM) and/or random access memory (RAM)). By way of example, and not limitation, system memory may also include operating systems, application programs, other program modules, and program data.

Embodiments may be implemented as a system, method or program product. Therefore, the embodiments may take the form of an all-hardware embodiment or an embodiment including software (including firmware, resident software, microcode, and the like), which may be collectively referred to herein as "circuits," "modules," or "systems." In addition, embodiments may take the form of a program product embodied in at least one device-readable medium on which device-readable program code is embodied.

A combination of device-readable storage media may be used. In the context of this document, a device-readable storage medium ("storage medium") may be any tangible, non-signaling medium that may contain or store a program composed of program code configured to be used by or in combination with an instruction execution system, apparatus, or device. For the purposes of this invention, storage media or devices should be interpreted as non-transitory, that is, excluding signal or propagation media.

This invention has been presented for purposes of illustration and description, but is not intended to be exhaustive or limited. Many modifications and variations will be apparent to those skilled in the art. The embodiments were chosen and described in order to explain the principles and practical applications, and to enable those skilled in the art to understand the various embodiments of the present invention with various modifications that are suitable for the particular use intended.

## Claims

1. An image recognition system, comprising:
an information entry module, configured to enter information of an inspected object, and identify whether or not the information of the inspected object is abnormal information, wherein the information entry module comprises a face recognition module for identifying a suspected person;
a detection module, configured to detect whether or not contraband is carried by the inspected object and/or his/her luggage;
an augmented reality (AR) display device, configured to, in at least one of a case where the information of the inspected object is abnormal and a case where contraband is carried by the inspected object and/or his/her luggage, obtain from the information entry module and/or the detection module the information of the inspected object and/or information of the contraband, issue an alert and mark the inspected object and/or contraband in the AR display device; and
a storage module, configured to store information generated during operations of the information entry module, the detection module, and the AR display device,
wherein the detection module comprises a first detection lane, a second detection lane, a first detection device, and a second detection device, wherein:
the first detection device is located at front of the first detection lane, the second detection device is located at rear of the first detection lane, and both the first detection device and the second detection device comprise a first image acquisition device and a second image acquisition device, the first image acquisition device being configured to acquire a terahertz image of the inspected object, and the second image acquisition device being configured to acquire depth information about the inspected object and a color image about the inspected object, wherein an image of the contraband is marked on the inspected object in the color image, pixels in the terahertz image are aligned with pixels in the color image to obtain transformation parameters between the first image acquisition device and the second image acquisition device, and a location of the contraband on the inspected object in the terahertz image is mapped to a corresponding area of the inspected object in the color image, utilizing the transformation parameters;
the second detection lane comprises a photographing device located at a front end of the second detection lane, the photographing device photograph the inspected object and the luggage belonging to the inspected object and store an image of the inspected object in the storage module in association with an image of the luggage of the inspected object,
the detection module is configured to detect, based on the terahertz image and the color image, whether or not contraband is carried by the inspected object.

2. The image recognition system of claim 1, wherein the detection module is further configured to establish, by the second image acquisition devices included in the first detection device and the second detection device, a global coordinate system for the second image acquisition devices to obtain a spatial position of each inspected object in the global coordinate system and/or a spatial position of the carried contraband in the global coordinate system.

3. The image recognition system of claim 1, wherein the detection module further comprises an auxiliary image acquisition device, which is located at a middle portion of the first detection lane and is configured to acquire depth information about the inspection object and a color image about the inspection object.

4. The image recognition system of claim 3, wherein the detection module is further configured to establish, by the auxiliary image acquisition device and the second image acquisition devices included in the first detection device and the second detection device, a global coordinate system for the auxiliary image acquisition device and the second image acquisition devices to obtain a spatial position of each inspected object in the global coordinate system and/or a spatial position of the carried contraband in the global coordinate system.

5. The image recognition system of claim 2 or 4, wherein the AR display device is further configured to: obtain, based on the spatial position of each inspected object in the global coordinate system and/or the spatial position of the carried contraband in the global coordinate system, according to a conversion relationship between the AR display device and the global coordinate system, spatial position information of each inspected object and/or the carried contraband in a perspective of the AR display device to mark the inspected object and/or contraband on the AR display device.

6. An image recognition method, comprising:
entering information of an inspected object and identifying whether or not the information of the inspected object is abnormal information, by an information entry module, wherein the information entry module comprises a face recognition module for identifying a suspected person;
detecting, by a detection module, whether or not contraband is carried by the inspected object and/or his/her luggage;
in at least one of a case where the information of the inspected object is abnormal and a case where contraband is carried by the inspected object and/or his/her luggage, obtaining from the information entry module and/or the detection module the information of the inspected object and/or information of the contraband, issuing an alert and marking the inspected object and/or contraband in an augmented reality (AR) display device, by the AR display device; and
storing, by a storage module, information generated during execution of the image recognition method,
wherein the detecting, by the detection module, whether or not contraband is carried by the inspected object and/or his/her luggage comprises:
acquiring terahertz images of the inspected object by first image acquisition devices included in a first detection device and a second detection device of the detection module, wherein the first detection device is located in front of a first detection lane in the detection module, and the second detection device is located at rear of the first detection lane;
acquiring depth information and color images about the inspected object by second image acquisition devices included in the first detection device and the second detection device of the detection module, wherein an image of the contraband is marked on the inspected object in the color image, pixels in the terahertz image are aligned with pixels in the color image to obtain transformation parameters between the first image acquisition device and the second image acquisition device, and a location of the contraband on the inspected object in the terahertz image is mapped to a corresponding area of the inspected object in the color image, utilizing the transformation parameters;
photographing the inspected object and the luggage belonging to the inspected object and storing an image of the inspected object in the storage module in association with an image of the luggage of the inspected object, by a photographing device, wherein the photographing device is located at a front end of a second detection lane; and
detecting, based on the terahertz images and the color images, whether or not contraband is carried by the inspected object.

7. The image recognition method of claim 6, wherein the marking the inspected object and/or contraband in the AR display device comprises:
establishing, by the second image acquisition devices included in the first detection device and the second detection device, a global coordinate system for the second image acquisition devices to obtain a spatial position of each inspected object in the global coordinate system and/or a spatial position of the carried contraband in the global coordinate system; and
marking the inspected object and/or contraband in the AR display device based on the spatial positions.

8. The image recognition method of claim 6, wherein the marking the inspected object and/or contraband in the AR display device comprises:
establishing, by an auxiliary image acquisition device provided in a middle portion of the first detection lane and the second image acquisition devices included in the first detection device and the second detection device, a global coordinate system for the auxiliary image acquisition device and the second image acquisition devices to obtain a spatial position of each inspected object in the global coordinate system and/or a spatial position of the carried contraband in the global coordinate system, wherein the auxiliary image acquisition device is configured to acquire depth information about the inspection object and a color image about the inspection object; and
marking the inspected object and/or contraband in the AR display device based on the spatial positions.

9. The image recognition method of claim 7 or 8, wherein the marking the inspected object and/or contraband in the AR display device further comprises:
obtaining, based on the spatial position of each inspected object in the global coordinate system and/or the spatial position of the carried contraband in the global coordinate system, according to a conversion relationship between the AR display device and the global coordinate system, spatial position information of each inspected object and/or the carried contraband in a perspective of the AR display device to mark the inspected object and/or contraband on the AR display device.

10. An electronic device, comprising:
one or more processors; and
a memory configured to store one or more programs, wherein,
when the one or more programs are executed by the one or more processors, the one or more processors implement the method of any one of claims 6 to 9.

11. A non-transitory computer-readable medium comprising a computer program product recorded thereon and capable of being executed by a processor, said computer program product comprising program code instructions for implementing the method of any one of claims 6 to 9.

## Patentansprüche

1. Ein Bildverkennungssystem, umfassend:
ein Informationseingabemodul, eingerichtet zum Eingeben von Informationen eines überprüften Objekts und zum Identifizieren, ob die Informationen des überprüften Objekts anormale Informationen sind oder nicht, wobei das Informationseingabemodul ein Gesichtserkennungsmodul zum Identifizieren einer verdächtigen Person umfasst;
ein Detektionsmodul, eingerichtet zum Erkennen, ob vom überprüften Objekt und/oder dessen Gepäck verbotene Gegenstände getragen werden oder nicht;
ein Augmented-Reality-(AR)-Anzeigegerät, eingerichtet, um in zumindest einem Fall, in dem die Informationen des überprüften Objekts anormal sind, und in einem Fall, in dem verbotene Gegenstände vom überprüften Objekt und/oder dessen Gepäck getragen werden, die Informationen des überprüften Objekts und/oder Informationen der verbotenen Gegenstände vom Informationseingabemodul und/oder dem Detektionsmodul zu erhalten, einen Alarm auszugeben und das überprüfte Objekt und/oder die verbotenen Gegenstände im AR-Anzeigegerät zu markieren; und
ein Speichermodul, eingerichtet zum Speichern von Informationen, die während des Betriebs des Informationseingabemoduls, des Detektionsmoduls und des AR-Anzeigegeräts erzeugt werden,
wobei das Detektionsmodul eine erste Detektionsspur, eine zweite Detektionsspur, ein erstes Detektionsgerät und ein zweites Detektionsgerät umfasst, wobei:
das erste Detektionsgerät sich vor der ersten Detektionsspur befindet, das zweite Detektionsgerät sich am Ende der ersten Detektionsspur befindet, und sowohl das erste Detektionsgerät als auch das zweite Detektionsgerät ein erstes Bilderfassungsgerät und ein zweites Bilderfassungsgerät umfassen, wobei das erste Bilderfassungsgerät eingerichtet ist, ein Terahertzbild des überprüften Objekts zu erfassen, und das zweite Bilderfassungsgerät eingerichtet ist, Tiefeninformationen über das überprüfte Objekt und ein Farbbild über das überprüfte Objekt zu erfassen, wobei ein Bild des verbotenen Gegenstands im Farbbild auf dem überprüften Objekt markiert ist, Pixel im Terahertzbild mit Pixeln im Farbbild ausgerichtet werden, um Transformationsparameter zwischen dem ersten Bilderfassungsgerät und dem zweiten Bilderfassungsgerät zu erhalten, und ein Ort des verbotenen Gegenstands auf dem überprüften Objekt im Terahertzbild unter Nutzung der Transformationsparameter auf einen entsprechenden Bereich des überprüften Objekts im Farbbild abgebildet wird;
die zweite Detektionsspur ein Aufnahmegerät umfasst, das sich an einem vorderen Ende der zweiten Detektionsspur befindet, wobei das Aufnahmegerät das überprüfte Objekt und das Gepäck, das dem überprüften Objekt gehört, aufnimmt und ein Bild des überprüften Objekts im Speichermodul in Zuordnung zu einem Bild des Gepäcks des überprüften Objekts speichert,
wobei das Detektionsmodul eingerichtet ist, basierend auf dem Terahertzbild und dem Farbbild zu erkennen, ob vom überprüften Objekt verbotene Gegenstände getragen werden oder nicht.

2. Das Bildverkennungssystem nach Anspruch 1, wobei das Detektionsmodul ferner eingerichtet ist, durch die in dem ersten Detektionsgerät und dem zweiten Detektionsgerät enthaltenen zweiten Bilderfassungsgeräte ein globales Koordinatensystem für die zweiten Bilderfassungsgeräte zu erstellen, um eine räumliche Position jedes überprüften Objekts im globalen Koordinatensystem und/oder eine räumliche Position der getragenen verbotenen Gegenstände im globalen Koordinatensystem zu erhalten.

3. Das Bildverkennungssystem nach Anspruch 1, wobei das Detektionsmodul ferner ein zusätzliches Bilderfassungsgerät umfasst, das sich in einem mittleren Abschnitt der ersten Detektionsspur befindet und eingerichtet ist, Tiefeninformationen über das Überprüfungsobjekt und ein Farbbild über das Überprüfungsobjekt zu erfassen.

4. Das Bildverkennungssystem nach Anspruch 3, wobei das Detektionsmodul ferner eingerichtet ist, durch das zusätzliche Bilderfassungsgerät und die in dem ersten Detektionsgerät und dem zweiten Detektionsgerät enthaltenen zweiten Bilderfassungsgeräte ein globales Koordinatensystem für das zusätzliche Bilderfassungsgerät und die zweiten Bilderfassungsgeräte zu erstellen, um eine räumliche Position jedes überprüften Objekts im globalen Koordinatensystem und/oder eine räumliche Position der getragenen verbotenen Gegenstände im globalen Koordinatensystem zu erhalten.

5. Das Bildverkennungssystem nach Anspruch 2 oder 4, wobei das AR-Anzeigegerät ferner eingerichtet ist: basierend auf der räumlichen Position jedes überprüften Objekts im globalen Koordinatensystem und/oder der räumlichen Position der getragenen verbotenen Gegenstände im globalen Koordinatensystem, gemäß einer Umwandlungsbeziehung zwischen dem AR-Anzeigegerät und dem globalen Koordinatensystem, räumliche Positionsinformationen jedes überprüften Objekts und/oder der getragenen verbotenen Gegenstände in einer Perspektive des AR-Anzeigegeräts zu erhalten, um das überprüfte Objekt und/oder die verbotenen Gegenstände im AR-Anzeigegerät zu markieren.

6. Ein Bilderkennungsverfahren, umfassend:
Eingeben von Informationen eines überprüften Objekts und Identifizieren, ob die Informationen des überprüften Objekts anormale Informationen sind oder nicht, durch ein Informationseingabemodul, wobei das Informationseingabemodul ein Gesichtserkennungsmodul zum Identifizieren einer verdächtigen Person umfasst;
Erkennen, durch ein Detektionsmodul, ob vom überprüften Objekt und/oder dessen Gepäck verbotene Gegenstände getragen werden oder nicht;
in zumindest einem Fall, in dem die Informationen des überprüften Objekts anormal sind, und in einem Fall, in dem verbotene Gegenstände vom überprüften Objekt und/oder dessen Gepäck getragen werden, Erhalten der Informationen des überprüften Objekts und/oder Informationen der verbotenen Gegenstände vom Informationseingabemodul und/oder dem Detektionsmodul, Ausgeben eines Alarms und Markieren des überprüften Objekts und/oder der verbotenen Gegenstände in einem Augmented-Reality-(AR)-Anzeigegerät durch das AR-Anzeigegerät; und
Speichern, durch ein Speichermodul, von Informationen, die während der Ausführung des Bilderkennungsverfahrens erzeugt werden,
wobei das Erkennen, durch das Detektionsmodul, ob vom überprüften Objekt und/oder dessen Gepäck verbotene Gegenstände getragen werden oder nicht, umfasst:
Erfassen von Terahertzbildern des überprüften Objekts durch erste Bilderfassungsgeräte, die in einem ersten Detektionsgerät und einem zweiten Detektionsgerät des Detektionsmoduls enthalten sind, wobei sich das erste Detektionsgerät vor einer ersten Detektionsspur im Detektionsmodul befindet und sich das zweite Detektionsgerät am Ende der ersten Detektionsspur befindet;
Erfassen von Tiefeninformationen und Farbbildern über das überprüfte Objekt durch zweite Bilderfassungsgeräte, die in dem ersten Detektionsgerät und dem zweiten Detektionsgerät des Detektionsmoduls enthalten sind, wobei ein Bild des verbotenen Gegenstands im Farbbild auf dem überprüften Objekt markiert ist, Pixel im Terahertzbild mit Pixeln im Farbbild ausgerichtet werden, um Transformationsparameter zwischen dem ersten Bilderfassungsgerät und dem zweiten Bilderfassungsgerät zu erhalten, und ein Ort des verbotenen Gegenstands auf dem überprüften Objekt im Terahertzbild unter Nutzung der Transformationsparameter auf einen entsprechenden Bereich des überprüften Objekts im Farbbild abgebildet wird;
Aufnehmen des überprüften Objekts und des Gepäcks, das dem überprüften Objekt gehört, und Speichern eines Bildes des überprüften Objekts im Speichermodul in Zuordnung zu einem Bild des Gepäcks des überprüften Objekts durch ein Aufnahmegerät, wobei sich das Aufnahmegerät an einem vorderen Ende einer zweiten Detektionsspur befindet; und
Erkennen, basierend auf den Terahertzbildern und den Farbbildern, ob vom überprüften Objekt verbotene Gegenstände getragen werden oder nicht.

7. Das Bilderkennungsverfahren nach Anspruch 6, wobei das Markieren des überprüften Objekts und/oder der verbotenen Gegenstände im AR-Anzeigegerät umfasst:
Erstellen, durch die in dem ersten Detektionsgerät und dem zweiten Detektionsgerät enthaltenen zweiten Bilderfassungsgeräte, eines globalen Koordinatensystems für die zweiten Bilderfassungsgeräte, um eine räumliche Position jedes überprüften Objekts im globalen Koordinatensystem und/oder eine räumliche Position der getragenen verbotenen Gegenstände im globalen Koordinatensystem zu erhalten; und
Markieren des überprüften Objekts und/oder der verbotenen Gegenstände im AR-Anzeigegerät basierend auf den räumlichen Positionen.

8. Das Bilderkennungsverfahren nach Anspruch 6, wobei das Markieren des überprüften Objekts und/oder der verbotenen Gegenstände im AR-Anzeigegerät umfasst:
Erstellen, durch ein zusätzliches Bilderfassungsgerät, das in einem mittleren Abschnitt der ersten Detektionsspur vorgesehen ist, und die in dem ersten Detektionsgerät und dem zweiten Detektionsgerät enthaltenen zweiten Bilderfassungsgeräte, eines globalen Koordinatensystems für das zusätzliche Bilderfassungsgerät und die zweiten Bilderfassungsgeräte, um eine räumliche Position jedes überprüften Objekts im globalen Koordinatensystem und/oder eine räumliche Position der getragenen verbotenen Gegenstände im globalen Koordinatensystem zu erhalten, wobei das zusätzliche Bilderfassungsgerät eingerichtet ist, Tiefeninformationen über das Überprüfungsobjekt und ein Farbbild über das Überprüfungsobjekt zu erfassen; und
Markieren des überprüften Objekts und/oder der verbotenen Gegenstände im AR-Anzeigegerät basierend auf den räumlichen Positionen.

9. Das Bilderkennungsverfahren nach Anspruch 7 oder 8, wobei das Markieren des überprüften Objekts und/oder der verbotenen Gegenstände im AR-Anzeigegerät ferner umfasst:
Erhalten, basierend auf der räumlichen Position jedes überprüften Objekts im globalen Koordinatensystem und/oder der räumlichen Position der getragenen verbotenen Gegenstände im globalen Koordinatensystem, gemäß einer Umwandlungsbeziehung zwischen dem AR-Anzeigegerät und dem globalen Koordinatensystem, räumliche Positionsinformationen jedes überprüften Objekts und/oder der getragenen verbotenen Gegenstände in einer Perspektive des AR-Anzeigegeräts, um das überprüfte Objekt und/oder die verbotenen Gegenstände im AR-Anzeigegerät zu markieren.

10. Ein elektronisches Gerät, umfassend:
einen oder mehrere Prozessoren; und
einen Speicher, eingerichtet zum Speichern eines oder mehrerer Programme, wobei,
wenn das eine oder die mehreren Programme von dem einen oder den mehreren Prozessoren ausgeführt werden, der eine oder die mehreren Prozessoren das Verfahren nach einem der Ansprüche 6 bis 9 implementieren.

11. Ein nicht-flüchtiges, computerlesbares Medium, umfassend ein darauf aufgezeichnetes Computerprogrammprodukt, das von einem Prozessor ausführbar ist, wobei das Computerprogrammprodukt Programmcodes umfasst, die Anweisungen zur Implementierung des Verfahrens nach einem der Ansprüche 6 bis 9 enthalten.

## Revendications

1. Un système de reconnaissance d'images, comprenant :
un module de saisie d'informations, configuré pour saisir des informations d'une personne inspectée et identifier si les informations de la personne inspectée sont des informations anormales ou non, le module de saisie d'informations comprenant un module de reconnaissance faciale pour identifier une personne suspecte ;
un module de détection, configuré pour détecter si des objets de contrebande sont portés par la personne inspectée et/ou ses bagages ;
un dispositif d'affichage de réalité augmentée (RA), configuré pour, dans au moins l'un d'un cas où les informations de la personne inspectée sont anormales et d'un cas où des objets de contrebande sont portés par la personne inspectée et/ou ses bagages, obtenir du module de saisie d'informations et/ou du module de détection les informations de la personne inspectée et/ou des informations des objets de contrebande, émettre une alerte et marquer la personne inspectée et/ou les objets de contrebande dans le dispositif d'affichage RA ; et
un module de stockage, configuré pour stocker des informations générées lors des opérations du module de saisie d'informations, du module de détection et du dispositif d'affichage RA,
dans lequel le module de détection comprend une première voie de détection, une deuxième voie de détection, un premier dispositif de détection et un deuxième dispositif de détection, dans lequel :
le premier dispositif de détection est situé à l'avant de la première voie de détection, le deuxième dispositif de détection est situé à l'arrière de la première voie de détection, et tant le premier dispositif de détection que le deuxième dispositif de détection comprennent un premier dispositif d'acquisition d'images et un deuxième dispositif d'acquisition d'images, le premier dispositif d'acquisition d'images étant configuré pour acquérir une image térahertz de la personne inspectée, et le deuxième dispositif d'acquisition d'images étant configuré pour acquérir des informations de profondeur concernant la personne inspectée et une image en couleur concernant la personne inspectée, une image des objets de contrebande étant marquée sur la personne inspectée dans l'image en couleur, des pixels de l'image térahertz étant alignés avec des pixels de l'image en couleur pour obtenir des paramètres de transformation entre le premier dispositif d'acquisition d'images et le deuxième dispositif d'acquisition d'images, et un emplacement des objets de contrebande sur la personne inspectée dans l'image térahertz étant cartographié sur une zone correspondante de la personne inspectée dans l'image en couleur, en utilisant les paramètres de transformation ;
la deuxième voie de détection comprend un dispositif de prise de vues situé à une extrémité avant de la deuxième voie de détection, le dispositif de prise de vues photographie la personne inspectée et les bagages appartenant à la personne inspectée et stocke une image de la personne inspectée dans le module de stockage en association avec une image des bagages de la personne inspectée,
le module de détection est configuré pour détecter, sur la base de l'image térahertz et de l'image en couleur, si des objets de contrebande sont portés par la personne inspectée.

2. Le système de reconnaissance d'images de la revendication 1, dans lequel le module de détection est en outre configuré pour établir, par les deuxièmes dispositifs d'acquisition d'images inclus dans le premier dispositif de détection et le deuxième dispositif de détection, un système de coordonnées global pour les deuxièmes dispositifs d'acquisition d'images afin d'obtenir une position spatiale de chaque personne inspectée dans le système de coordonnées global et/ou une position spatiale des objets de contrebande portés dans le système de coordonnées global.

3. Le système de reconnaissance d'images de la revendication 1, dans lequel le module de détection comprend en outre un dispositif d'acquisition d'images auxiliaire, qui est situé à une portion médiane de la première voie de détection et est configuré pour acquérir des informations de profondeur concernant l'objet d'inspection et une image en couleur concernant l'objet d'inspection.

4. Le système de reconnaissance d'images de la revendication 3, dans lequel le module de détection est en outre configuré pour établir, par le dispositif d'acquisition d'images auxiliaire et les deuxièmes dispositifs d'acquisition d'images inclus dans le premier dispositif de détection et le deuxième dispositif de détection, un système de coordonnées global pour le dispositif d'acquisition d'images auxiliaire et les deuxièmes dispositifs d'acquisition d'images afin d'obtenir une position spatiale de chaque personne inspectée dans le système de coordonnées global et/ou une position spatiale des objets de contrebande portés dans le système de coordonnées global.

5. Le système de reconnaissance d'images de la revendication 2 ou 4, dans lequel le dispositif d'affichage RA est en outre configuré pour : obtenir, sur la base de la position spatiale de chaque personne inspectée dans le système de coordonnées global et/ou de la position spatiale des objets de contrebande portés dans le système de coordonnées global, selon une relation de conversion entre le dispositif d'affichage RA et le système de coordonnées global, des informations de position spatiale de chaque personne inspectée et/ou des objets de contrebande portés dans une perspective du dispositif d'affichage RA pour marquer la personne inspectée et/ou les objets de contrebande sur le dispositif d'affichage RA.

6. Un procédé de reconnaissance d'images, comprenant :
saisir des informations d'une personne inspectée et identifier si les informations de la personne inspectée sont des informations anormales ou non, par un module de saisie d'informations, le module de saisie d'informations comprenant un module de reconnaissance faciale pour identifier une personne suspecte ;
détecter, par un module de détection, si des objets de contrebande sont portés par la personne inspectée et/ou ses bagages ;
dans au moins l'un d'un cas où les informations de la personne inspectée sont anormales et d'un cas où des objets de contrebande sont portés par la personne inspectée et/ou ses bagages, obtenir du module de saisie d'informations et/ou du module de détection les informations de la personne inspectée et/ou des informations des objets de contrebande, émettre une alerte et marquer la personne inspectée et/ou les objets de contrebande dans un dispositif d'affichage de réalité augmentée (RA), par le dispositif d'affichage RA ; et
stocker, par un module de stockage, des informations générées lors de l'exécution du procédé de reconnaissance d'images,
dans lequel le fait de détecter, par le module de détection, si des objets de contrebande sont portés par la personne inspectée et/ou ses bagages comprend :
acquérir des images térahertz de la personne inspectée par des premiers dispositifs d'acquisition d'images inclus dans un premier dispositif de détection et un deuxième dispositif de détection du module de détection, le premier dispositif de détection étant situé à l'avant d'une première voie de détection dans le module de détection, et le deuxième dispositif de détection étant situé à l'arrière de la première voie de détection ;
acquérir des informations de profondeur et des images en couleur concernant la personne inspectée par des deuxièmes dispositifs d'acquisition d'images inclus dans le premier dispositif de détection et le deuxième dispositif de détection du module de détection, une image des objets de contrebande étant marquée sur la personne inspectée dans l'image en couleur, des pixels de l'image térahertz étant alignés avec des pixels de l'image en couleur pour obtenir des paramètres de transformation entre le premier dispositif d'acquisition d'images et le deuxième dispositif d'acquisition d'images, et un emplacement des objets de contrebande sur la personne inspectée dans l'image térahertz étant cartographié sur une zone correspondante de la personne inspectée dans l'image en couleur, en utilisant les paramètres de transformation ;
photographier la personne inspectée et les bagages appartenant à la personne inspectée et stocker une image de la personne inspectée dans le module de stockage en association avec une image des bagages de la personne inspectée, par un dispositif de prise de vues, le dispositif de prise de vues étant situé à une extrémité avant d'une deuxième voie de détection ; et
détecter, sur la base des images térahertz et des images en couleur, si des objets de contrebande sont portés par la personne inspectée.

7. Le procédé de reconnaissance d'images de la revendication 6, dans lequel le marquage de la personne inspectée et/ou des objets de contrebande dans le dispositif d'affichage RA comprend :
établir, par les deuxièmes dispositifs d'acquisition d'images inclus dans le premier dispositif de détection et le deuxième dispositif de détection, un système de coordonnées global pour les deuxièmes dispositifs d'acquisition d'images afin d'obtenir une position spatiale de chaque personne inspectée dans le système de coordonnées global et/ou une position spatiale des objets de contrebande portés dans le système de coordonnées global ; et
marquer la personne inspectée et/ou les objets de contrebande dans le dispositif d'affichage RA sur la base des positions spatiales.

8. Le procédé de reconnaissance d'images de la revendication 6, dans lequel le marquage de la personne inspectée et/ou des objets de contrebande dans le dispositif d'affichage RA comprend :
établir, par un dispositif d'acquisition d'images auxiliaire prévu dans une portion médiane de la première voie de détection et les deuxièmes dispositifs d'acquisition d'images inclus dans le premier dispositif de détection et le deuxième dispositif de détection, un système de coordonnées global pour le dispositif d'acquisition d'images auxiliaire et les deuxièmes dispositifs d'acquisition d'images afin d'obtenir une position spatiale de chaque personne inspectée dans le système de coordonnées global et/ou une position spatiale des objets de contrebande portés dans le système de coordonnées global, le dispositif d'acquisition d'images auxiliaire étant configuré pour acquérir des informations de profondeur concernant l'objet d'inspection et une image en couleur concernant l'objet d'inspection ; et
marquer la personne inspectée et/ou les objets de contrebande dans le dispositif d'affichage RA sur la base des positions spatiales.

9. Le procédé de reconnaissance d'images de la revendication 7 ou 8, dans lequel le marquage de la personne inspectée et/ou des objets de contrebande dans le dispositif d'affichage RA comprend en outre :
obtenir, sur la base de la position spatiale de chaque personne inspectée dans le système de coordonnées global et/ou de la position spatiale des objets de contrebande portés dans le système de coordonnées global, selon une relation de conversion entre le dispositif d'affichage RA et le système de coordonnées global, des informations de position spatiale de chaque personne inspectée et/ou des objets de contrebande portés dans une perspective du dispositif d'affichage RA pour marquer la personne inspectée et/ou les objets de contrebande sur le dispositif d'affichage RA.

10. Un dispositif électronique, comprenant :
un ou plusieurs processeurs ; et
une mémoire configurée pour stocker un ou plusieurs programmes, dans lequel,
lorsque le ou les programmes sont exécutés par le ou les processeurs, le ou les processeurs mettent en œuvre le procédé de l'une quelconque des revendications 6 à 9.

11. Un support lisible par ordinateur non transitoire comprenant un produit programme d'ordinateur y étant enregistré et apte à être exécuté par un processeur, ledit produit programme d'ordinateur comprenant des instructions de code de programme pour mettre en œuvre le procédé de l'une quelconque des revendications 6 à 9.
